# EUROPÄISCHE PATENTSCHRIFT

(11) **EP 1 623 142 B1**
(45) Veröffentlichungstag und Bekanntmachung des Hinweises auf die Patenterteilung: **03.01.2007**
(21) Anmeldenummer: 04739175.0
(22) Anmeldetag: 11.05.2004
(51) Int. Cl.: F16H 21/12, B62D 3/12, F16H 35/02

(54) **PROGRESSIVER ÜBERSETZUNGSMECHANISMUS**
PROGRESSIVE MULTIPLICATION MECHANISM
MECANISME DE TRANSMISSION PROGRESSIVE

(30) Priorität: 15.05.2003 CH 8592003
(43) Veröffentlichungstag der Anmeldung: 08.02.2006
(73) Patentinhaber: Bless, Werner M., 8808 Pfäffikon SZ (CH); Rott, Erwin, 8630 Rüti ZH (CH)
(72) Erfinder: Bless, Werner M., 8808 Pfäffikon SZ (CH); Rott, Erwin, 8630 Rüti ZH (CH)
(74) Vertreter: Dendorfer, Claus
(86) Internationale Anmeldenummer: PCT/EP2004/005044
(87) Internationale Veröffentlichungsnummer: WO 2004/102039

(56) Entgegenhaltungen:
- EP-A- 0 915 003
- WO-A-20/04000628
- DE-A- 19 519 588

## Beschreibung

Die Erfindung betrifft einen Übersetzungsmechanismus eines progressiven Getriebes, insbesondere eines Lenkgetriebes für ein Fahrzeug, mit je einer Aufnahme für eine Antriebswelle und eine Abtriebswelle.

Progressive Getriebe werden vielerorts eingesetzt. Eine der wichtigsten Anwendungen sind Lenkgetriebe aller Art, vornehmlich aber Lenkgetriebe von gesteuerten Fortbewegungsmitteln aller Art, beispielsweise Lenkgetriebe von Fahrzeugen.

Ein Getriebe ist eine Vorrichtung zur Weiterleitung oder Umformung von Bewegungen. Hier von Interesse sind Getriebe, die eine Drehbewegung einer Antriebswelle in eine Drehbewegung einer Abtriebswelle umsetzen. Im Falle eines Lenkgetriebes eines Fahrzeuges ist die Antriebswelle direkt oder indirekt mit einem Lenkrad gekoppelt, während die Abtriebswelle mit einem geeigneten Mechanismus gekoppelt ist, der eine Richtungsänderung des zu lenkenden Fahrzeuges verursacht. Bei einer Zahnstangenlenkung umfassen diese Mechanismen üblicherweise ein Ritzel, das an die Abtriebswelle gekoppelt ist und eine Zahnstange, in die das Ritzel greift. Beim Drehen am Lenkrad wird die Zahnstange verschoben und schwenkt mittels Spurstangen die zu lenkenden Räder. Andere Beispiele für diese Mechanismen umfassen unter anderem Schneckenrollenlenkungen und Kugelumlauflenkungen.

Im Gegensatz zu Getrieben mit einer linearen Beziehung zwischen der Antriebswelle und der Abtriebswelle weisen progressive Getriebe ein nichtlineares Verhältnis zwischen der Drehung der Antriebswelle und der Drehung der Abtriebswelle auf.

Beim Beispiel eines Fahrzeuges ist die Wirkung einer Drehung des Lenkrades um einen bestimmten Winkel demnach abhängig von der momentanen Stellung dieses Lenkrades. Vorteilhafterweise ist diese Wirkung klein in der Geradeausstellung des Lenkrades und wird grösser, je weiter das Lenkrad eingeschlagen ist. Dies gewährleistet bei hohen Geschwindigkeiten eine präzise Lenkung um die Geradeausstellung, da selbst eine relativ grosse Bewegung des Lenkrades lediglich eine kleine Richtungsänderung der Fahrspur verursacht. Beim Manövrieren hingegen, wenn das Lenkrad bereits stark eingeschlagen ist, verursacht eine kleine Drehbewegung einer progressiven Lenkung bereits eine relativ grosse Spuränderung. Dies ist speziell beim Parkieren erwünscht, um effizient von einem Anschlag der Radstellung zum anderen Anschlag wechseln zu können.

In der gattungsbildenden EP 0 915 003 B1 (Wandfluh) wird eine Fahrzeuglenkung mit variablem Übersetzungsverhältnis vorgestellt, die insgesamt vier Drehachsen enthält, die sich alle in einem Punkt schneiden. Der Nachteil dieser Kugelumlauflenkung besteht darin, dass die Hebel nicht in einer Ebene liegen sondern steile Winkel zueinander aufweisen. Diese technisch heikle und instabile Lösung ist toleranzempfindlich und fordert einen hohen Aufwand an die Genauigkeit der Teile, um nicht zu viel Spiel aufzuweisen. Dies führt zu hohen Montagekosten, da die Lager mit hohem Aufwand präzise eingestellt werden müssen. Durch die Steilheit der Kugelumlauflenkung nimmt die Feinfühligkeit der Lenkung ab, weil das Gefühl für die Lenkung über die Kugeln der Radiallenkung verloren geht. Die relativ tote Lenkung im Bereich der Geradeausfahrt wechselt bei einem Lenkradeinschlag von etwa 75° ziemlich abrupt in eine Lenkung mit starker Progression, wie aus der Figur 6 der zitierten Schrift hervorgeht. Aus derselben Figur geht weiterhin hervor, dass der maximal mögliche Einschlagswinkel des Lenkrades beidseitig auf 105° begrenzt ist. Dies ist ein weiterer Nachteil dieser Lösung, da der gesamte Lenkbereich bereits in 210° erfolgt sein muss.

Die Schrift DE 195 19 588 A1 (Honda) stellt ein weiteres Lenkgetriebe mit einer progressiven Charakteristik vor. Die Variabilität des Übersetzungsverhältnisses beruht bei diesem Lenkgetriebe darauf, dass die Abtriebswelle des Lenkgetriebes bezüglich dessen Antriebswelle zwar parallel verlaufend, aber versetzt (exzentrisch) angeordnet ist. Zur Kupplung der Antriebswelle mit der Abtriebswelle ist ein Zwischenelement zwischen den beiden Wellen angeordnet, das im Wesentlichen die Funktion einer Schubkurbel (Schubgelenk kombiniert mit Drehgelenk) hat und das Drehmoment von der Antriebswelle oder einer mit der Antriebswelle drehfest verbundenen Verlängerung auf die Abtriebswelle überträgt. Die Tendenz der Wirkung eines solchen Lenkgetriebes ist wohl erwünscht, da das Lenkverhalten harmonisch progressiv mit steigender Auslenkung des Lenkrades wächst. Andererseits wäre wünschenswert, diese Charakteristik stärker auszuprägen. Mit der in der erwähnten Schrift vorgestellten technischen Lösung lässt sich dies nicht realisieren, da bereits für die Realisierung dieser niedrigen Ausgeprägtheit der Progression ein enormer technischer Aufwand erforderlich ist, um einen spielfreien Verlauf zu gewährleisten.

In der EP 0 915 003 B1 ist eine umfangreiche Liste mit weiteren bekannten Lösungen für progressive Lenkgetriebe mit den verschiedenen technischen Realisierungen und deren Schwachstellen angegeben.

Aufgabe der vorliegenden Erfindung ist es, einen Übersetzungsmechanismus eines progressiven Getriebes, vorzugsweise als Lenkung für ein Fahrzeug, zu schaffen, der sich dadurch auszeichnet, dass er toleranz-unempfindlich ist, ohne Einstellungen spielfrei arbeitet und ein günstiges Kräfteverhältnis aufweist. Zudem ist eine möglichst gleichmässige Progression gewünscht, bei der das Verhältnis von Lenkwinkel zu Spurwinkel von der Geradeausfahrt bis zum Bereich des vollen Einschlags auf etwa das 5-fache abnimmt. Die Ausführung soll Platz sparend und flach ausgestaltet sein.

Die Aufgabe wird erfindungsgemäss gelöst durch die Kennzeichen des Anspruchs 1.

Die Lösung wird gegeben durch einen einzigen Koppler, der gekröpft sowohl an der Antriebswelle als auch an der Abtriebswelle schwenkend an Lagern verbunden ist. Durch geeignete Wahl des Abstandes der Lager auf dem Koppler und die Versetzung der Lager zu den Wellenachsen kann die Progression nach Bedarf abgestimmt werden. Die gesamte Progression wird durch eine Drehung der Antriebswelle von -180° bis +180° durchlaufen. Die Übertragung ist nicht vollkommen symmetrisch bei einer Linksrespektive Rechts-Drehung, was sich aber erstaunlicherweise nicht störend auswirkt auf das Lenkverhalten.

Der Übersetzungsmechanismus kann in einer Platte untergebracht werden, da sich alle Bewegungen des Übersetzungsmechanismus in einer Ebene abspielen.

Der Vorteil eines solchen Getriebes liegt in der einfachen und daher kostengünstigen Herstellung der Ausführung und in seinem geringen Platzbedarf. Die Spielfreiheit der Mechanik und die direkte Kraftübertragung dank geeigneter Winkel der einzelnen Komponenten zueinander sind weitere Vorteile.

Die Erfindung wird nachfolgend unter Bezugnahme auf die Zeichnungen näher beschrieben. Es zeigen:
- Fig. 1: Eine perspektivische Darstellung eines Ausführungsbeispieles in Explosionsansicht;
Fig. 2 eine Darstellung verschiedener Positionen der Hebel und des Kopplers während einer Umdrehung des Lenkrades und
Fig. 3 eine Darstellung verschiedener Stellungen des Abtriebgelenkes während einer Umdrehung.

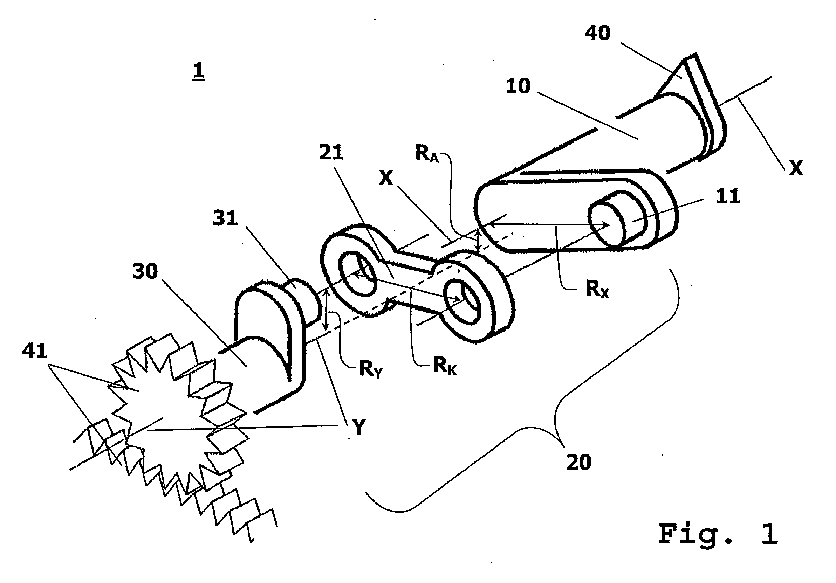

Die Fig. 1 zeigt eine Antriebswelle 10 mit einer Achse X und eine Antriebswelle 10 mit einer Achse Y, wobei die beiden Achsen X, Y vorwiegend parallel mit einem Achsenversatz R_{A} zueinander verlaufen. Zwischen den beiden Wellen ist ein Übersetzungsmechanismus 20 angebracht. Dieser verursacht ein progressives Verhalten der Abtriebswelle 30 bei der Drehung der Antriebswelle 10.

Auf der Antriebswelle 10 ist ein Antriebsgelenk 11 versetzt um einen Antriebsversatz R_{X} zur Achse X der Antriebswelle 10 angebracht. Auf der Abtriebswelle 30 ist ein Abtriebsgelenk 31 versetzt um einen Abtriebsversatz R_{Y} zur Achse Y der Abtriebswelle 30 angebracht. Diese beiden Gelenke 11, 31 befinden sich in einem festen Kopplungsabstand R_{K} zueinander. Dies wird gewährleistet durch einen Koppler 21, der diese Gelenke 11, 31 im gewünschten Abstand miteinander schwenkend verbindet. Die Gelenke 11, 31 lassen ausschliesslich Bewegungen in einer Ebene senkrecht zu den Achsen X und Y zu.

Der Koppler 21 besteht aus einem einzigen Teil und ist vorzugsweise flächig ausgebildet. Als Lager in den Gelenken 11, 31 können Wälzlager, insbesondere Nadellager, oder Gleitlager verwendet werden oder jede äquivalente Lösung angewandt werden, die der Fachwelt bekannt ist.

In der Figur 1 ist das Lenkrad 40 symbolisch an der Abtriebswelle 30 dargestellt. Ein Ritzel und eine Zahnstange 41 sind, ebenfalls symbolisch, an der Abtriebswelle 30 dargestellt. Die Zeichnung soll allerdings keineswegs als einschränkend gedeutet werden.

Entscheidend ist die Proportionierung der vier Masse, namentlich der Achsenversatz R_{A}, der Antriebsversatz R_{X}, der Abtriebsversatz R_{Y} und der Kopplungsabstand R_{K} zueinander. Primär muss gewährleistet sein, dass der vollständige mechanische Umlauf des Übersetzungsmechanismus 20 durchführbar ist. Eine weitere Forderung besteht in der optimalen Kr-aftübertragung der Antriebswelle 10 zur Abtriebswelle 30. Zu diesem Zweck soll sich der Winkel α, der sich aus den Geradestücken ergibt, in denen R_{K} und R_{Y} liegen, möglichst in den Bereichen um 90° herum bewegen. Der Winkel α soll demnach stets zwischen 40° und 135 ° liegen.

Um diese Anforderungen zu erfüllen, werden die Proportionen so festgelegt, dass das Verhältnis vom Achsenversatz R_{A} zum Antriebsversatz R_{X} mindestens zwischen 1:10 und 4:10, vorzugsweise zwischen 1.8:10 und 3:10 liegt. Zudem soll das Verhältnis vom Abtriebsversatz R_{Y} zum Antriebsversatz R_{X} mindestens zwischen 2:10 und 7:10, vorzugsweise um 5:10 sein. Das Verhältnis vom Antriebsversatz R_{X} zum Kopplungsabstand R_{K} soll mindestens zwischen 7:10 und 13:10, vorzugsweise etwa um 1:1 liegen.

Ein bevorzugtes Ausführungsbeispiel hat etwa folgende Masse:

| | vorteilhafter Bereich (mm) | vorteilhafter engerer Bereich (mm) | bevorzugtes Beispiel(mm) |
|---|---|---|---|
| Achsenversatz R_{A} | 4-20 | 6-10 | 7 |
| Antriebsversatz R_{X} | 20-80 | 25-50 | 34 |
| Abtriebsversatz R_{Y} | 10-40 | 12-20 | 15 |
| Kopplungsabstand R_{K} | 20-80 | 25-50 | 33 |

Das Getriebe 1 lässt sich auch mit anderen Massen und Dimensionen der beschriebenen Komponenten erreichen, insbesondere mit einem Vielfachen des angegebenen Beispiels. Beim Einsatz einer Lenkung für ein Fahrzeug ist allerdings die Grösse entscheidend, da die Platzverhältnisse in Fahrzeugen meistens sehr beschränkt sind. Die hier angegeben Grössen geben einen guten Kompromiss zwischen Zuverlässigkeit der Funktion des Getriebes zu Platz sparender Ausführungsgrösse.

Sämtliche Masse können von den obigen Angaben der idealen Verhältnisse abweichen, solange der mechanische Umlauf gewährleistet bleibt. Obwohl die Kraftübertragungen dann nicht mehr optimal sind, können andere Masse und Proportionen in gewissen Anwendungsbereichen vorteilhaft sein, beispielsweise um den gesamten Platzbedarf des Getriebes zu verringern oder um die Hebelwirkung in bestimmten Lagen der Drehung zu erhöhen.

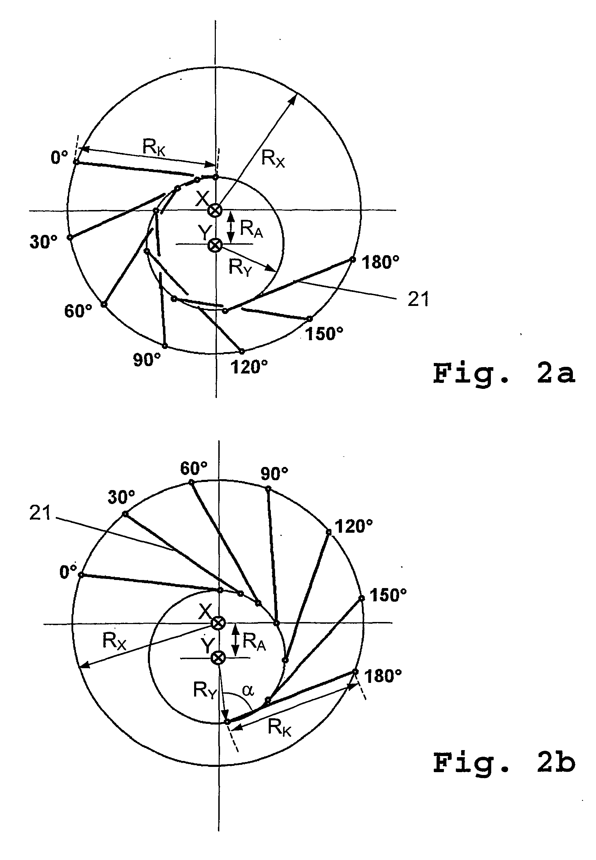

In der Figur 2 sind die verschiedenen Lenkradstellungen mit ihren Auswirkungen auf die Abtriebswelle 30 dargestellt. Fig. 2a beschreibt eine Linksdrehung zwischen 0 und 180 °, Fig. 2b die entsprechende Rechtsdrehung. Der äussere Kreis gibt den Verlauf des Antriebsgelenkes 11 an, der innere Kreis den Verlauf des Abtriebsgelenkes 31 während einer Umdrehung. Die Verbindungslinien zwischen dem äusseren und dem inneren Kreis markieren den Koppler 21 in den jeweiligen Positionen.

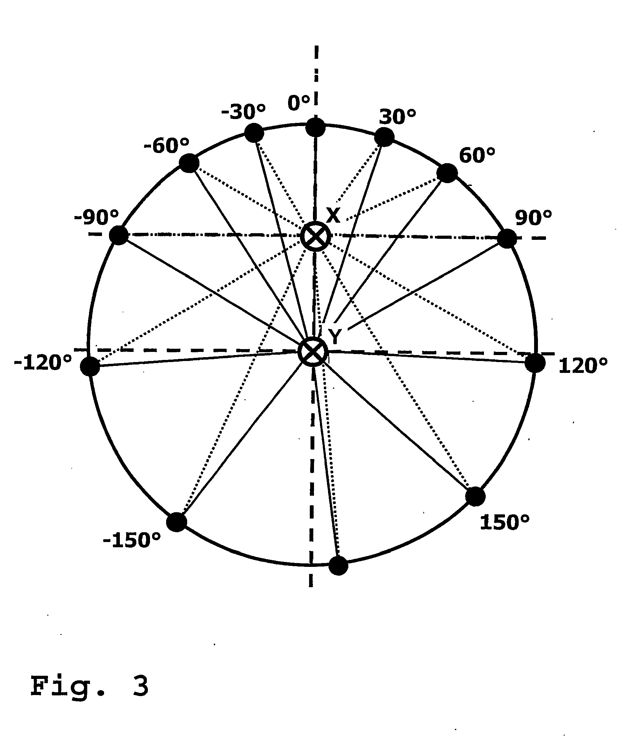

In der Figur 3 ist die Progression der Lenkung erkennbar. Der abgebildete Kreis beschreibt die jeweiligen Stellungen des Abtriebsgelenkes 31 bei den jeweils angegebenen Lenkradstellungen.

Aus den Figuren 2 und 3 lässt sich leicht erkennen, dass die 180° Stellung des Lenkrads nur eine geringe Abweichung von der idealen 180° Stellung des Ritzels zur Folge hat. Im Fahrverhalten lässt sich diese Abweichung allerdings keineswegs spüren. Die Symmetrie der Lenkung bei einer Links/Rechts Drehung ist in diesem Ausführungsbeispiel gemessen an der technischen Einfachheit der Lösung sehr hoch. Ein asymmetrisches Verhalten, speziell bei kleinen Auslenkungen von der Geradeauslage, würde ein Lenker sofort bemerken und als störend empfinden.

Die Achsen X der Antriebswelle 10 und Y der Abtriebswelle 30 müssen nicht notwendigerweise parallel sein. Durch Verwendung sphärischer Lager kann das Einstellen der Lenkradneigung ermöglicht werden. Die in dieser Schrift angegebenen Daten und Abstände sind in diesem Fall sinngemäss anzuwenden und zu entnehmen.

Beim Einsatz eines erfinderischen Übersetzungsmechanismus 20 ist es zusätzlich denkbar, die Zahnstange und/oder das Ritzel 41 einer an das Getriebe 1 angekoppelte Zahnstangenlenkung ebenfalls progressiv anzuordnen, um die Progression um etwa weitere 30-35% zu verstärken.

Ein Einsatz von ein bis zwei Kreuzgelenken in der Antriebswelle vor dem Übersetzungsmechanismus wirkt sich zusätzlich positiv auf die Progression aus.

Das hier beschriebene Getriebe 1 lässt sich mit jeder anderen Art von Lenkung ebenso gut kombinieren wie mit einer hier beschriebenen Zahnstangenlenkung. Herkömmliche Massnahmen wie eine Servolenkung, Sollbruchstellen und jede denkbare Art eines Lenksystems sowie Winkelgetriebe sind in gleicher Weise wie bisher einsetzbar.

Jedes herkömmliche Fahrzeug lässt sich auch mit einer geeigneten Ausführung einer Lenkung mit einem erfindungsgemässen Übersetzungsmechanismus 20 nachrüsten. Um beispielsweise die Anpassung an das bestehende Ritzel einer Zahnstangenlenkung vorzunehmen, lässt sich ein Planetengetriebe auf der Abtriebswelle 30 anbringen, das die erforderliche Umsetzung aufweist, damit der gewünschte Weg der Zahnstange bei jeweils einer Lenkradumdrehung von -180° bis +180° erreicht wird.

Vorteile dieses erfinderischen Übersetzungsmechanismus 20 sind das günstige Kraftverhältnis der Antriebswelle 10 auf die Abtriebswelle 30, die Spielfreiheit und Unempfindlichkeit der Toleranz, die Platz sparende Anordnung sowie die einfache und günstige Herstellung und Montage.

### Liste der Bezeichnungen

- 1: Getriebe
- 10: Antriebswelle
- 11: Antriebsgelenk
- 20: Übersetzungsmechanismus
- 21: Koppler
- 30: Abtriebswelle
- 31: Abtriebsgelenk
- 40: Lenkrad
- 41: Ritzel, Zahnstange
- X: Achse der Antriebswelle
- Y: Achse der Abtriebswelle
- R_{X}: Antriebsversatz
- R_{Y}: Abtriebsversatz
- R_{A}: Achsenversatz
- R_{K}: Kopplungsabstand
- α: Winkel, der durch die Geraden gebildet wird, auf denen R_{K} und R_{Y} liegen.

## Patentansprüche

1. Übersetzungsmechanismus (20) eines progressiven Getriebes (1), insbesondere eines Lenkgetriebes für ein Fahrzeug, mit je einer Aufnahme für eine Antriebswelle (10) und eine Abtriebswelle (30), **dadurch gekennzeichnet, dass** an der Aufnahme für die Antriebswelle (10) versetzt zu seiner Achse (X) in einem Antriebsversatz (R_{X}) ein Antriebsgelenk (11) angebracht ist, dass an der Aufnahme für die Abtriebswelle (30) versetzt zu seiner Achse (Y) in einem Abtriebsversatz (R_{Y}) ein Abtriebsgelenk (31) angebracht ist, dass diese Gelenke (11, 31) in einem festen Kopplungsabstand (R_{K}) zueinander mittels genau eines Kopplers (21) gelenkig miteinander verbunden sind und dass die Achsen der Antriebswelle (X) und der Abtriebswelle (Y) mehrheitlich parallel zueinander in einem festen Achsenversatz (R_{A}) verlaufen.

2. Übersetzungsmechanismus nach Anspruch 1, **dadurch gekennzeichnet, dass** alle Längen- und Abstandsverhältnisse (R_{X}, R_{Y}, R_{A}, R_{K}) derart gewählt sind, dass in der fertig montierten Lage der Umlauf der Antriebswelle (10) und der Abtriebswelle (30) mechanisch gewährleistet ist.

3. Übersetzungsmechanismus nach einem der Ansprüche 1 bis 2, **gekennzeichnet durch** eine flache Ausgestaltung in einer Ebene quer zu den Wellen (X, Y).

4. Übersetzungsmechanismus nach einem der Ansprüche 1 bis 3, **dadurch gekennzeichnet, dass** das Verhältnis vom Achsenversatz (R_{A}) zum Antriebsversatz (R_{X}) mindestens zwischen 1:10 und 4:10, vorzugsweise zwischen 1.8:10 und 3:10 liegt.

5. Übersetzungsmechanismus nach einem der Ansprüche 1 bis 4, **dadurch gekennzeichnet, dass** das Verhältnis vom Abtriebsversatz (R_{Y}) zum Antriebsversatz (R_{X}) mindestens zwischen 2:10 und 7:10, vorzugsweise um 5:10 liegt.

6. Übersetzungsmechanismus nach einem der Ansprüche 1 bis 5, **dadurch gekennzeichnet, dass** das Verhältnis Antriebsversatz (R_{X}) zum Kopplungsabstand (R_{K}) mindestens zwischen 7:10 und 13:10, vorzugsweise etwa um 1:1 liegt.

7. Übersetzungsmechanismus nach einem der Ansprüche 1 bis 6, **dadurch gekennzeichnet, dass** der Winkel (α) zwischen der Geraden, auf welcher der Kopplungsabstand (R_{K}) liegt und der Geraden, auf welcher der Abtriebsversatz (R_{Y}) verläuft, während dem gesamten Umlauf nicht spitzer als 40° und nicht stumpfer als 135° wird.

8. Übersetzungsmechanismus nach einem der Ansprüche 1 bis 7, **dadurch gekennzeichnet, dass** der Antriebsversatz (R_{X}) zwischen 20 und 80 mm, vorzugsweise zwischen 30 und 40 mm beträgt.

9. Übersetzungsmechanismus nach einem der Ansprüche 1 bis 8, **dadurch gekennzeichnet**, das die Antriebswelle (10) und/oder die Abtriebswelle (30) integriert sind.

10. Übersetzungsmechanismus nach einem der Ansprüche 1 bis 9, **dadurch gekennzeichnet, dass** es mit einem Planetengetriebe an der Abtriebswelle (30) versehen ist.

## Claims

1. Transmission mechanism (20) of a progressive gear (1), especially a steering gear for a vehicle, comprising a seating for each of an input shaft (10) and an output shaft (30), **characterised in that** an input articulation (11) is provided at the seating for the input shaft (10) offset from its axis (X) by an input offset (R_{X}), **in that** an output articulation (31) is provided at the seating for the output shaft (30) offset from its axis (Y) by an output offset (R_{Y}), **in that** said articulations (11, 31) are in articulated connection with one another at a fixed coupling spacing (R_{K}) from one another by means of exactly one coupler (21) and **in that** the axes of the input shaft (X) and of the output shaft (Y) extend mostly parallel to one another at a fixed axial offset (R_{A}).

2. Transmission mechanism according to claim 1, **characterised in that** all length and spacing conditions (R_{X}, R_{Y}, R_{A}, R_{K}) are so selected that in the completely assembled state rotation of the input shaft (10) and of the output shaft (30) is mechanically possible.

3. Transmission mechanism according to one of claims 1 to 2, **characterised by** a shallow construction in a plane transverse to the shafts (X, Y).

4. Transmission mechanism according to one of claims 1 to 3, **characterised in that** the ratio of the axial offset (R_{A}) to the input offset (R_{X}) is at least between 1:10 and 4:10, preferably between 1.8:10 and 3:10.

5. Transmission mechanism according to one of claims 1 to 4, **characterised in that** the ratio of the output offset (R_{Y}) to the input offset (R_{X}) is at least between 2:10 and 7:10, preferably about 5:10.

6. Transmission mechanism according to one of claims 1 to 5, **characterised in that** the ratio of the input offset (R_{X}) to the coupling spacing (R_{K}) is at least between 7:10 and 13:10, preferably around about 1:1.

7. Transmission mechanism according to one of claims 1 to 6, **characterised in that**, in the course of the entire rotation, the angle (α) between the straight line on which the coupling spacing (R_{K}) is located and the straight line on which the output offset (R_{Y}) is located does not become more acute than 40° or more obtuse than 135°.

8. Transmission mechanism according to one of claims 1 to 7, **characterised in that** the input offset (R_{X}) is between 20 and 80 mm, preferably between 30 and 40 mm.

9. Transmission mechanism according to one of claims 1 to 8, **characterised in that** the input shaft (10) and/or output shaft (30) are integrated.

10. Transmission mechanism according to one of claims 1 to 9, **characterised in that** it is provided with a planetary gear at the output shaft (30).

## Revendications

1. Mécanisme de transmission (20) d'un mécanisme progressif (1), notamment d'un organe de direction destiné à un véhicule, avec respectivement un logement pour l'arbre d'entraînement (10) et pour l'arbre mené (30), **caractérisé par le fait que**, en décalage par rapport à son axe (X), une articulation d'entraînement (11) est intégrée d'un désalignement d'entraînement (R_{X}) au niveau du logement de l'arbre d'entraînement (10), qu'une articulation menée (31) est intégrée, en décalage par rapport à son axe (Y), d'un désalignement mené (R_{Y}) au niveau du logement de l'arbre mené (30), que ces articulations (11, 31) sont souplement reliées entre elles à une distance de couplage fixe (R_{K}) à l'aide d'un accouplement unique (21) et que les axes de l'arbre d'entraînement (X) et de l'arbre mené (Y) sont positionnés essentiellement en parallèle avec un décalage d'axe (R_{A}) fixe.

2. Mécanisme de transmission d'après la revendication 1, **caractérisé par le fait que** tous les rapports de longueur et d'écartement (R_{X}, R_{Y}, R_{A}, R_{K}) sont sélectionnés de façon à ce que la rotation de l'arbre d'entraînement (10) et de l'arbre mené (30) soit assurée mécaniquement après réalisation du montage de l'ensemble.

3. Mécanisme de transmission d'après l'une des revendications 1 à 2, **caractérisé par** une conception' plate sur un plan transversal par rapport aux arbres (X, Y).

4. Mécanisme de transmission d'après l'une des revendications 1 à 3, **caractérisé par le fait que** le rapport entre le décalage d'axe (R_{A}) et le désalignement d'entraînement (R_{X}) est au minimum de 1:10 à 4:10, de préférence entre 1,8:10 et 3:10.

5. Mécanisme de transmission d'après l'une des revendications 1 à 4, **caractérisé par le fait que** le rapport entre le désalignement mené (R_{Y}) et le désalignement d'entraînement (R_{X}) est au minimum de 02:10 à 07:10, de préférence approximativement de 5:10.

6. Mécanisme de transmission d'après l'une des revendications 1 à 5, **caractérisé par le fait que** le rapport entre le désalignement d'entraînement (R_{X}) et l'écart d'accouplement (R_{K}) est au minimum de 7:10 à 13:10, de préférence approximativement de 1:1.

7. Mécanisme de transmission d'après l'une des revendications 1 à 6, **caractérisé par le fait que** l'angle (α) entre la ligne droite sur laquelle est situé l'écart d'accouplement (R_{K}) et la ligne droite sur laquelle passe le désalignement mené (R_{Y}) n'est pas inférieur à 40° et supérieur à 135° durant l'ensemble de la rotation.

8. Mécanisme de transmission d'après l'une des revendications 1 à 7, **caractérisé par le fait que** le désalignement d'entraînement (R_{X}) est de 20 à 80 mm, de préférence de 30 à 40 mm.

9. Mécanisme de transmission d'après l'une des revendications 1 à 8, **caractérisé par le fait que** l'arbre d'entraînement (10) et/ou l'arbre mené (30) sont intégrés.

10. Mécanisme de transmission d'après l'une des revendications 1 à 9, **caractérisé par le fait qu'**il est équipé d'un engrenage planétaire sur l'arbre d'entraînement (30).
